(19) Europäisches Patentamt
European Patent Office
Office européen des brevets

(11) **EP 3 811 898 A1**

(12) **EUROPEAN PATENT APPLICATION**

(43) Date of publication:
**28.04.2021 Bulletin 2021/17**

(51) Int Cl.:
***A61C 13/09*** *(2006.01)*     ***A61C 13/00*** *(2006.01)*

(21) Application number: **19205186.0**

(22) Date of filing: **24.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Canon Production Printing Holding B.V.**
**5914 HH Venlo (NL)**

(72) Inventors:
- **IONASCU, Felicia G.**
  **5914 HH Venlo (NL)**
- **VALADE, Cédric T.**
  **5914 HH Venlo (NL)**
- **FILIPPOVYCH, Kateryna**
  **5914 HH Venlo (NL)**
- **VAN DER MEER, René J.**
  **5914 HH Venlo (NL)**

(74) Representative: **Canon Production Printing IP Department**
**St. Urbanusweg 43**
**5914 CA Venlo (NL)**

(54) **A METHOD AND APPARATUS FOR PRINTING A PROSTHETIC TOOTH IN 3D DENTAL PRINTING APPLICATIONS**

(57) The invention relates to a method for printing a prosthetic tooth. A first step comprises segmenting an enamel part and a dentin part of a tooth to be replaced. Another step comprises modelling the enamel part and the dentin part of the prosthetic tooth, such that the enamel shape and the dentin shape of the prosthetic tooth correspond to the segmented enamel part and the segmented dentin part of the tooth to be replaced. The method also comprises generating a plurality of slices of the prosthetic tooth according to the enamel shape and the dentin shape, which are subsequently printed.

FIG.3

**Description**

BACKGROUND OF THE INVENTION

The present invention generally pertains to printing 3D teeth. More particularly, the invention relates to a method for representing the different parts of a tooth, namely the enamel and the dentin, during the printing of a prosthetic tooth to replace that of a patient.

Achieving 3D printed aesthetic and permanent dental prosthesis has long been an objective of the printing industry. One of the main difficulties to reach this objective relates to achieving a 3D printed tooth whose appearance (color, glossiness, opalescence, and translucency) resembles that of the tooth of a patient in need of a prosthetic replacement.

In order to reach the aforementioned objective, it is important to achieve a correct representation of the different parts that make up a natural tooth. Namely, a natural tooth has an internal structure named dentin and an external structure named enamel. According to medical literature, the dentin gives the opacity and color of the tooth as it is perceived by our eyes, while the enamel is transparent.

The enamel is a crucial component in achieving the appearance of the tooth despite its transparency. As a consequence, a correct characterization of it will lead to improved appearance of the 3D printed tooth. The thickness of the enamel on various points on the tooth surface is variable and specific to each patient, but current crown design techniques based on porcelain materials use predefined shapes of enamel, which do not yield a correct appearance.

On the other hand, dentin, like bone, is composed primarily of an organic matrix of collagen fibers and the mineral material hydroxyapatite. Approximately, dentin contains 45 - 50 % inorganic apatite crystals, about 30% of organic matrix, and about 25% water.

The dentin has a particular anisotropic structure consisting of a plurality of minute tubes, usually referred to as dentine tubules. Said tubules start at the pulp and end at the junction of the enamel and the dentin. Further, said tubules are thicker and have a larger volumetric density at the pulp, thereby forming a structure which is visually distinguishable when observing a trans-illuminated tooth.

The shape of the dentin tubules can be used during the process of printing a tooth to vary the color of the tooth. However, in order to successfully reproduce the shape of the dentin tubules during printing of a 3D dental prosthesis, the miniscule diameter of the tubules (about 0.9 $\mu$m near the enamel-dentin junction) represents a challenge, as a resolution of circa 25.400 dpi would be needed. In order to reproduce the structure of the dentin during printing, modern techniques use modelling methods which utilize the gradient operator exclusively in the vertical direction to control the color of the resulting 3D prosthesis. However, said modelling methods do not fully describe the complexity of the natural tooth structure and do not reach, as a consequence, a printed result which resembles the particular tooth of a patient in need of prosthesis.

As a consequence, it is desired to have a method and apparatus for representing the different parts of a tooth in 3D dental printing applications which are capable of accurately representing the particular shape of said parts of the tooth of a particular patient, such that a tooth resembling that of a patient in need of a prosthetic replacement can be reached.

SUMMARY OF THE INVENTION

In an aspect of the present invention, method for printing a prosthetic tooth according to claim 1 is provided. In another aspect of the present invention, an apparatus for printing a prosthetic tooth is provided.

In an embodiment, a first step comprises segmenting the enamel part and the dentin part of a tooth to be replaced. In order to be able to generate an adequate replica of the tooth of a patient, it is crucial to perform an accurate segmentation of the 3D shape of the different parts of a tooth (i.e. determining their boundaries), namely the dentin and the enamel, as the fundamental differences between their tissues (as explained supra) cause said different parts to have very different optical properties that directly impact the outer appearance of the generated prosthetic replica.

Another step of the method of the present invention comprises modelling the enamel part and the dentin part of the prosthetic tooth, such that the enamel shape and the dentin shape of the prosthetic tooth correspond to the segmented enamel part and the segmented dentin part of the tooth to be replaced. It is paramount for a correct characterization of the prosthetic tooth that the modelling of the different areas of a prosthetic tooth takes into account the determined regions for the enamel and the dentin in order to be able to reach a result that accurately reproduces the same outer color of the tooth to be replaced.

Finally, once the regions corresponding to the enamel and the dentin have been determined and modelled, a plurality of slices of the prosthetic tooth according to the enamel shape and the dentin shape are generated and subsequently printed.

Each of the generated slices comprises a plurality of voxels in a plane, wherein each of the voxels is of the same dimension in the 3D space. This allows subsequently printing the plurality of slices onto each other in a direction perpendicular to the plane formed by each of said slices.

In an embodiment, the method of the present invention comprises a particular step of segmenting the enamel part of a tooth and the dentin part of a tooth. First, a 3D mesh of the external surface of a tooth is generated with a scanner. A person skilled in the art would readily recognize that several types of scanners can be used for this task, typically intra-oral scanners.

In another step (which can precede or come after the step of generating a 3D mesh), a image of a tooth in order to obtain an image of the enamel is generated. Subsequently, the generated image of a tooth is thresholded.

Based on these steps, it is possible to generate an enamel shape from the thresholded image combined with the generated 3D mesh. Said process comprises a plurality of steps. One step comprises obtaining the mesial and distal thickness of the enamel by processing the thresholded image. Based on these calculated thicknesses it is possible to infer the remaining ones, namely the lingual and palatal thickness of the enamel from the obtained mesial and distal thickness.

Once the mesial, distal, lingual and palatal thickness have been determined, based upon those thicknesses it is possible to calculate the distance from the junction of the dentin and the enamel with respect to the 3D mesh, thereby fully segmenting the enamel part, and as a consequence also segmenting the dentin. It is therefore also possible in an embodiment to segment the dentin part of a tooth by generating the dentin shape from the generated enamel shape combined with the generated 3D mesh.

In an embodiment, the step of generating an image of a tooth comprises generating an x-ray image. A person of skill in the art would readily understand that any other suitable imaging technique available in the art may be used instead.

In an embodiment, generating an image of a tooth comprises generating an image, transforming the image from RGB to HSV, isolating the most significant component of the transformed image, and performing the subsequent steps on the most significant component of the transformed image. This implementation has the distinct advantage of providing a particularly accurate representation of the region of the enamel-dentin junction, thereby allowing an accurate segmentation of the dentin and the enamel, which in turn allows the method of the present invention to provide a prosthetic tooth that accurately resembles a tooth to be replaced.

In an embodiment, the present invention involves an additional step of applying a filter to the generated image before thresholding. The use of said filter improves the segmentation of the different regions, thereby allowing a subsequent more accurate modelling step.

In an embodiment, modelling the dentin part of the prosthetic tooth comprises representing the dentin as an internal volume corresponding to the generated dentin shape, wherein the dentin part is modelled such that the volumetric color of the generated dentin part is similar to the dentin part of the tooth to be replaced. The method of the present invention allows taking exclusively into account the volumetric color to be achieved. As an example, the present invention can make use of a database containing a plurality of dentin parts. Said plurality of dentin parts can contain a plurality of different shapes and volumetric colors such that one reasonably similar to the shape and color of the dentin part of the tooth to be replaced can be used. This embodiment is particularly advantageous, as it allows reducing the complexity of the modelling process by allowing to exclusively model the dentin takin into account the volumetric color of the dentin shape that is needed, the shape of the enamel being known, in order to reach the color of the tooth to be replace by adding a transparent enamel layer of the known enamel shape.

In an embodiment, modelling the dentin part of the prosthetic tooth comprises a plurality of steps. First, a random distribution of points with varying density in a sigmoid shape is generated. Then, said generated random distribution of points is randomly replicated and positioned. In this way, a 3D distribution of the dentin is created which accurately mimics the natural structure of the dentin comprising micro-tubules. As a final step, the color of the volume voxels of the dentin in the 3D distribution is determined.

In an embodiment, modelling the enamel part of the prosthetic tooth comprises generating a plurality of voxels of transparent material corresponding to the generated enamel shape.

BRIEF DESCRIPTION OF THE DRAWINGS

The present invention will become more fully understood from the detailed description given below, and the accompanying drawings which are given by way of illustration only, and are thus not limitative of the present invention, and wherein:

Fig. 1     is a cross-sectional view of a tooth.

Fig. 2     shows the prior art technique of using predetermined shapes of the enamel.

Fig. 3     shows a flow diagram of the method of the present invention for representing enamel in 3D dental printing applications.

Fig. 4A    shows an acquired image of a tooth to be replaced.

Fig. 4B    shows a transformed image according to an embodiment of the invention.

Fig. 5     shows represents the embodiment of the present invention in which modelling the dentin part of the prosthetic tooth comprises representing the dentin as an internal volume corresponding to the generated dentin shape.

Fig. 6A    shows a CT-scan image showing dentin tubules in cross-section.

Fig. 6B    shows a cross-sectional view of a tooth comprising dentin tubules, pulp and enamel.

Fig. 7A    shows an example of the functions applied in the present invention for representing dentin in 3D dental printing applications.

Fig. 7B    shows another example of the functions applied in the present invention for representing dentin in 3D dental printing applications.

Fig. 8    shows a flow diagram of the method of the present invention for representing dentin in 3D dental printing applications.

DETAILED DESCRIPTION OF EMBODIMENTS

The present invention will now be described with reference to the accompanying drawings, wherein the same or similar elements are identified with the same reference numeral.

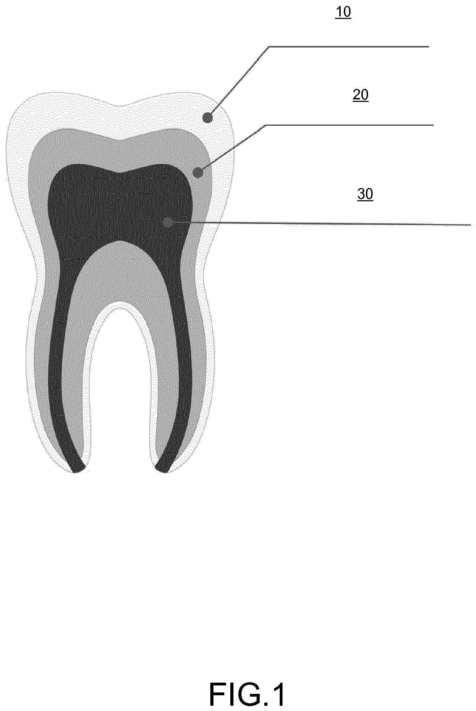

A cross sectional view of a tooth is shown in Fig. 1. Different parts of a tooth can be observed in Fig. 1, namely the enamel 10, the dentin 20, as well as the nerves and blood vessels 30. In order to create an orthodontic replica of a patient's tooth, usually only the enamel and dentin parts are reproduced. According to medical literature, the dentin gives the opacity and the color of the tooth as is perceived by our eyes, while the enamel is transparent. Despite its transparency, the shape of the enamel has a great impact in the outer appearance of the tooth. As a consequence, a correct characterization of both the enamel part 10 and the dentin part 20 of a tooth to be replaced is crucial to reach a correct appearance of a printed tooth for prosthetic replacement.

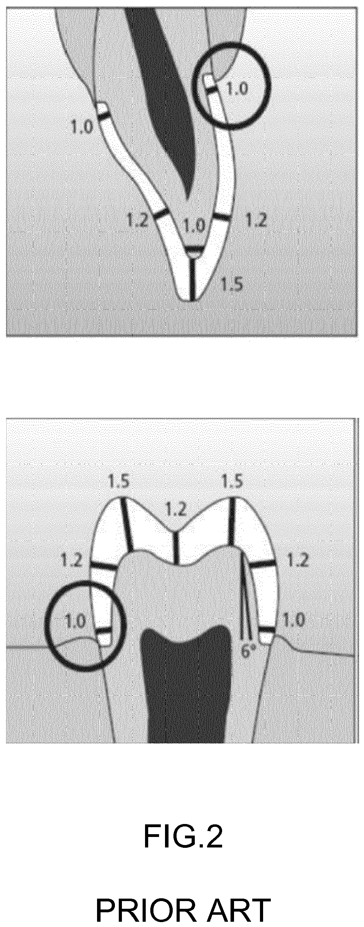

A prior art technique, using predetermined shapes of the enamel, is shown with reference to Fig. 2. These prior art techniques are not capable of accurately measuring the enamel pattern, i.e. its shape. As a consequence, said prior art techniques make use of one or a plurality of predefined shapes for the enamel, which does not allow said techniques to reproduce the enamel shape of a patient's tooth to be replaced. Fig. 2 shows said predetermined shapes for two different kinds of tooth. It can be observed that the thickness of enamel is predefined along the whole enamel area in the different tooth elements shown in Fig. 2.

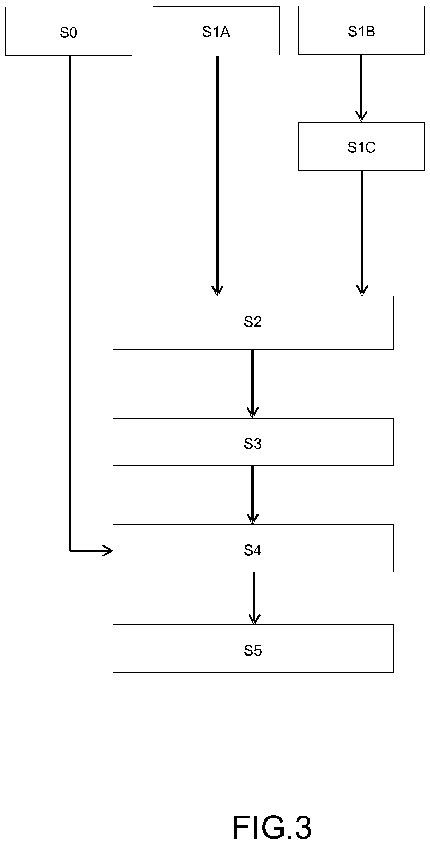

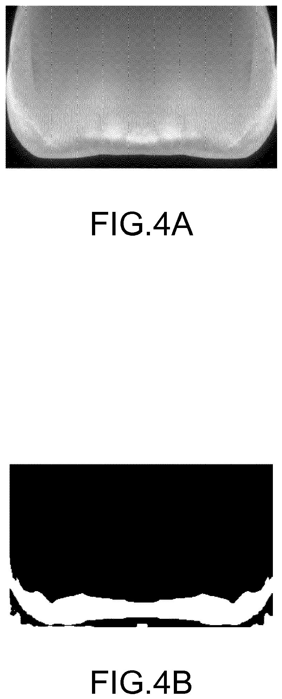

With reference to Fig. 3 of the drawings, a flow diagram of the method of the present invention for printing enamel in a tooth is illustrated. Further, Fig. 4 shows the result images of some of the steps of Fig. 3.

A first step S0 is performed in which a 3D mesh of the external surface of a tooth is obtained with a scanner.

Further, step S1A comprises taking an image of a tooth for which a prosthetic replacement is to be printed. Alternatively, in the tooth to be replaced is not available, an image of a tooth of a similar type belonging to the patient can be taken instead.

A person of skill in the art would readily understand that many imaging techniques are suitable for use in the present invention, such as x-ray, trans-illumination photography, MRI, intra-oral scanners, etc. All these techniques can be used to extract the geometry of the different parts of a tooth, as well as their color, translucency, etc.

In this case an alternative step S1B is the first step of the method. In this case, an additional step S1C is needed to extract the most relevant information. Step S1C comprises transforming an RGB image obtained in step S1B to an HSV (hue, saturation, value) image. The S element of the resulting HSV image contains the most relevant information in order to extract relevant data about the shape of the enamel of the imaged tooth. Therefore, said step S1C also comprises extracting the S component of the HSV image obtained in step S1B.

The next step S2 can then be performed either in the result of step S1A or in that of step S1C. Step S2 is an optional step, which comprises applying a blur filter in order to improve the result of step S1A or that of step S1C.

Next, step S3 comprises applying a thresholding to the image in order to isolate the different regions in the image, such that the subsequent steps can accurately extract the shape of the enamel of the imaged tooth. For example, a thresholding step performing an Otsu thresholding can be performed in step S3. A person of skill in the art would readily understand that any other suitable thresholding technique available in the art may be used instead.

Subsequently, step S4 is performed in which an enamel shape is extracted from the thresholded image resulting from step S3 combined with the 3D mesh generated in step S0. Step S4 comprises a plurality of substeps aimed at extracting the enamel shape. A first step comprises obtaining the mesial and distal thicknesses of the enamel by processing the thresholded image. In order to extract the enamel shape, the mesial $t_2$ and distal $t_2'$ thickness, as well as the lingual $t_1$ and facial $t_1'$ thickness, must be determined. Said thicknesses are explained more in detail below with reference to equation 1 and Figure 4. Once the mesial $t_2$ and distal $t_2'$ thickness have been measured, it is possible to infer the lingual $t_1$ and facial $t_1'$ thickness of the enamel from the obtained mesial and distal thickness based on known statistical measures, which usually take into account the type of tooth, the age of the patient, and any other variable that impacts said thickness. In this way, the algorithm of the present invention is capable of performing subsequent steps in the vertical direction while determining the thickness of the enamel at every point.

A (linear) function is deduced which is then used to compute the enamel thickness at any point:

$$\text{Equation 1} \qquad t = f\,(t_1,\, t_1',\, t_2,\, t_2',\, x,\, y,\, z)$$

The mesial and distal thickness t2 and t2' are therefore extracted by direct image analysis in step S4, t1 and t1' are inferred from statistical measures, while x, y, and z represent the position of enamel points in the object's 3D space. A person skilled in the art would understand that it is possible to infer t1 and t1' from different studies measuring enamel thicknesses in humans. As a final sub-step of S4, once the mesial, distal, lingual, and facial thickness of the enamel have been determined, it is possible to calculate the distance with respect to the 3D mesh generated in step S0, which allows completely determining the shape of the enamel.

As a next step, once the enamel shape has been determined in step S4, a subsequent step S5 is performed, in which a plurality of slices with the determined enamel shapes are generated. A final step S6 involves printing the generated plurality of slices.

With reference to Fig. 4 of the drawings, different images representing the result of different steps of the method of Fig. 3 are illustrated.

Fig. 4A represents the result of a step of acquiring a trans-illumination photograph of a tooth to be replaced.

Fig. 4B shows the result on the embodiment of the present invention in which generating an image of a tooth comprises generating an image of the tooth to be replaced, transforming the image from RGB to HSV, isolating the most significant component of the transformed image, and performing the subsequent steps on the most significant component of the transformed image. It can be observed that the segmentation between the dentin and the enamel regions has become clearer.

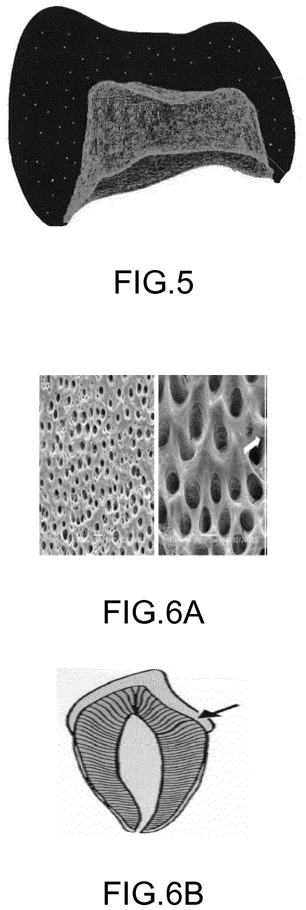

In relation with Fig 5, an embodiment of the present invention is illustrated in which modelling the dentin part of the prosthetic tooth comprises representing the dentin as an internal volume corresponding to the generated dentin shape. In said embodiment, the dentin is modelled such that its volumetric color resembles (it is ideally the same) that of the tooth to be replaced. This process reduces the complexity of the modelling process needed to reach a prosthetic tooth that resembles the tooth of a patient in need of prosthetic replacement.

The structure of the dentin part of a tooth is shown with reference to Figs. 6A and 6B. Dentin is formed primarily by an organic matrix of collagen fibers and the mineral hydroxyapatite. Dentin contains 45 to 50% inorganic apatite crystals, about 30% of organic matrix and about 25% water. According to medical literature, the dentin part of a tooth gives the opacity and color as perceived by the human eyes, as the enamel is mostly transparent. This is caused by the anisotropic structure of the dentin, which implies that the structural properties of the dentin have a different value when measured in different directions. Said anisotropic structure of the dentin comprises a plurality of miniature tubes, known in the art as dentin tubules, which start at the pulp and end at the dentin-enamel junction like shown in Fig. 6B. The dentin tubules are thicker and have a larger volumetric density at the pulp if compared with the same parameters near the dentin-enamel junction. The structure formed by said tubules is visually distinguishable in images of teeth taken with any of a plurality of suitable methods: x-ray, MRI, intra-oral scanners, trans-illumination photography, etc.

The above mentioned structure of the dentin can be used to vary the color of the printed tooth in an inkjet process. However, as the diameter of the tubules is very small, about $0.9\ \mu m$ in the dentin-enamel junction, a printer with an extremely high resolution, of approximately 25.400 dpi would be needed. Therefore, it is needed to model the dentin in order to find an approximation. Current modelling techniques, however, only make use of a vertical gradient function, and are not capable of capturing the complexity of the internal structure of the dentin.

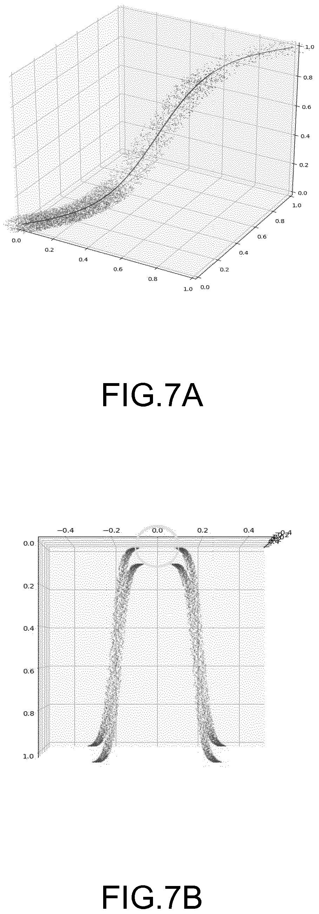

With reference to Figs. 7A and 7B of the drawings, a sigmoid function is illustrated. Said sigmoid function is used in the method of the present invention to model the tubules forming the dentin part of the printed tooth. A sigmoid function is a bounded, differentiable, real function that is defined for all real input values and has a non-negative derivative at each point. A sigmoid function is defined by the formula:

$$S(x) = \frac{1}{1 + e^{-x}} = \frac{e^x}{e^x + 1},$$

Fig. 7A represents a sigmoid onto which a distribution of points had been projected. As explained above, this kind of function closely resembles the structure of the tubules forming the dentin part of a tooth, and is therefore a useful tool to model the dentin.

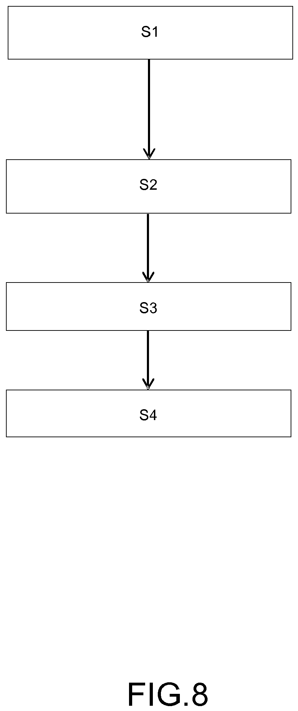

With reference to Fig. 8 of the drawings, a flow diagram of the method of the present invention for printing dentin in a tooth is illustrated. Said flow diagram is directed towards a method for printing the dentin part of a tooth that uses a modelling method of the dentin capable of reliably finding an approximation to its structure, such that a printed tooth can be used as a prosthetic replica.

A first step S1 is performed in which a 3D mesh of the external surface of a tooth is obtained with a scanner.

Next, a step S2 is performed comprising determining a plurality of voxels of the dentin. In this step the above mentioned sigmoid functions are used to model the dentin tubules. Said step S2 comprises a plurality of steps, which are explained below. Alternatively, a CAD application can be used to obtain the shape of the dentin, or a similar procedure as that explained supra to obtain the enamel shape can be used.

A first step S2A is performed in which a random distribution of points in an ellipse is generated. An ellipse is chosen as it is the geometrical function which more closely resembles the shape of the dentin tubules, more particularly the cross-section of said dentin tubules.

Another step S2B is performed in which a sigmoid function with varying density is generated. The density of tubules in the dentin close to the dentin-enamel junction is significantly bigger than in the region where pulp and dentin intersect. Therefore, in order to accurately reproduce this region, the density variation must also be such that it reflects the varying density of the tubules.

A further step S2C is performed in which the generated sigmoid function is applied to the generated random distribution. This step allows simulating the shape of the dentin tubules, taken into account their different characteristics depending upon their location within the dentin.

Then, a step S2D is performed in which the sigmoids are replicated and positioned.

A subsequent step S2E is performed in which a 3D distribution of the dentin is determined based on the positioning of the sigmoids performed in step S2D.

A final step is performed in which the color of the volume voxels of the 3D distribution of the dentin is determined.

Once step S2 has been completed, it is possible to combine in a step S3 the result of steps S1 and S2, i.e. to combine the determined 3D distribution of the dentin with the generated 3D mesh to generate a plurality of slices.

A final step S4 is performed in which the generated plurality of slices are printed.

The invention being thus described, it will be obvious that the same may be varied in many ways. Such variations are not to be regarded as a departure from the scope of the invention, and all such modifications as would be obvious to one skilled in the art are intended to be included within the scope of the following claims.

**Claims**

1. A method for printing a prosthetic tooth, comprising:

   segmenting an enamel part and a dentin part of a tooth to be replaced;
   modelling the enamel part and the dentin part of the prosthetic tooth, such that the enamel shape and the dentin shape of the prosthetic tooth correspond to the segmented enamel part and the segmented dentin part of the tooth to be replaced;
   generating a plurality of slices of the prosthetic tooth according to the enamel shape and the dentin shape; and
   printing the plurality of slices.

2. The method of claim 1, wherein segmenting the enamel part of a tooth and the dentin part of a tooth comprises:

   generating a 3D mesh of the external surface of a tooth with a scanner;

   generating an image of a tooth in order to obtain an image of the enamel;
   thresholding the generated image of a tooth;
   generating an enamel shape from the thresholded image combined with the generated 3D mesh, wherein generating comprises:

   obtaining the mesial and distal thickness of the enamel by processing the thresholded image;
   inferring the lingual and palatal thickness of the enamel from the obtained mesial and distal thickness;
   based on the mesial, distal, lingual and palatal thickness, calculating the distance from the junction of the dentin and the enamel with respect to the 3D mesh.

3. The method of claim 1, wherein segmenting the dentin part of a tooth comprises generating the dentin shape from the generated enamel shape combined with the generated 3D mesh.

4. The method of claims 2 or 3, wherein generating an image of a tooth comprises generating an x-ray image.

5. The method of any of claims 2 to 4, wherein generating an image of a tooth comprises generating an image, transforming image from RGB to HSV, isolating the most significant component of the transformed image, and performing the subsequent steps on the most significant component of the transformed image.

6. The method of any preceding claim, further comprising applying a filter to the generated image before thresholding.

7. The method of any preceding claim, wherein modelling the dentin part of the prosthetic tooth comprises representing the dentin as an internal volume corresponding to the generated dentin shape, wherein the dentin part is modelled such that the volumetric color of the generated dentin part is similar to the dentin part of the tooth to be replaced.

8. The method of any of claims 1 to 6, wherein modelling the dentin part of the prosthetic tooth comprises:

   generating a random distribution of points with varying density in a sigmoid shape;
   randomly replicating and positioning the generated random distribution of points in space, thereby creating a 3D distribution of the dentin;
   determining the color of the volume voxels of the dentin in the 3D distribution.

9. The method of any preceding claim, wherein modelling the enamel part of the prosthetic tooth comprises generating a plurality of voxels of transparent material corresponding to the generated enamel shape.

10

20

30

FIG.1

FIG.2

PRIOR ART

FIG.3

FIG.4A

FIG.4B

FIG.5

FIG.6A

FIG.6B

FIG.7A

FIG.7B

FIG.8

Europäisches
Patentamt

European
Patent Office

Office européen
des brevets

## EUROPEAN SEARCH REPORT

Application Number

EP 19 20 5186

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/090207 A1 (RUBBERT RUEDGER [DE]) 17 April 2008 (2008-04-17) * paragraph [0084] - paragraph [0216] * * figures * | 1-9 | INV. A61C13/09 A61C13/00 |
| Y | US 2018/028064 A1 (ELBAZ GILAD [IL] ET AL) 1 February 2018 (2018-02-01) * paragraph [0007] - paragraph [0267] * * claims * * figures * | 1-9 | |
| A | EP 2 874 121 A1 (NUCTECH CO LTD [CN]) 20 May 2015 (2015-05-20) * paragraph [0019] - paragraph [0020] * * figures * | 1-9 | |
| A | US 2011/212419 A1 (SCHWEIGER JOSEF [DE]) 1 September 2011 (2011-09-01) * paragraph [0008] - paragraph [0125] * * figures * | 1 | |
| A | CN 205 041 569 U (UNIV ZHEJIANG TECHNOLOGY; UNIV ZHEJIANG) 24 February 2016 (2016-02-24) * the whole document * | 1-9 | TECHNICAL FIELDS SEARCHED (IPC) A61C |

The present search report has been drawn up for all claims

| Place of search | Date of completion of the search | Examiner |
|---|---|---|
| Munich | 20 April 2020 | Fortune, Bruce |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ..............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 20 5186

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2020

| Patent document cited in search report | | Publication date | Patent family member(s) | | Publication date |
|---|---|---|---|---|---|
| US 2008090207 | A1 | 17-04-2008 | AT | 516768 T | 15-08-2011 |
| | | | EP | 2063804 A2 | 03-06-2009 |
| | | | EP | 2087852 A1 | 12-08-2009 |
| | | | EP | 2087853 A1 | 12-08-2009 |
| | | | EP | 2095789 A1 | 02-09-2009 |
| | | | EP | 3421006 A1 | 02-01-2019 |
| | | | US | 2008090207 A1 | 17-04-2008 |
| | | | WO | 2008047204 A2 | 24-04-2008 |
| US 2018028064 | A1 | 01-02-2018 | AU | 2017302364 A1 | 03-01-2019 |
| | | | CA | 3030676 A1 | 01-02-2018 |
| | | | CN | 107661159 A | 06-02-2018 |
| | | | CN | 208942463 U | 07-06-2019 |
| | | | DE | 202017007142 U1 | 12-02-2020 |
| | | | EP | 3490439 A1 | 05-06-2019 |
| | | | EP | 3578131 A1 | 11-12-2019 |
| | | | JP | 2019523064 A | 22-08-2019 |
| | | | KR | 20190022941 A | 06-03-2019 |
| | | | US | 2018028063 A1 | 01-02-2018 |
| | | | US | 2018028064 A1 | 01-02-2018 |
| | | | US | 2018028065 A1 | 01-02-2018 |
| | | | US | 2019076026 A1 | 14-03-2019 |
| | | | US | 2019095539 A1 | 28-03-2019 |
| | | | US | 2019258690 A1 | 22-08-2019 |
| | | | WO | 2018022940 A1 | 01-02-2018 |
| EP 2874121 | A1 | 20-05-2015 | CN | 104657519 A | 27-05-2015 |
| | | | EP | 2874121 A1 | 20-05-2015 |
| | | | ES | 2649467 T3 | 12-01-2018 |
| | | | PL | 2874121 T3 | 30-04-2018 |
| | | | US | 2015220683 A1 | 06-08-2015 |
| US 2011212419 | A1 | 01-09-2011 | DE | 102010002484 A1 | 01-09-2011 |
| | | | EP | 2363094 A2 | 07-09-2011 |
| | | | ES | 2654151 T3 | 12-02-2018 |
| | | | US | 2011212419 A1 | 01-09-2011 |
| CN 205041569 | U | 24-02-2016 | NONE | | |

EPO FORM P0459

For more details about this annex : see Official Journal of the European Patent Office, No. 12/82